# EUROPÄISCHE PATENTSCHRIFT

(11) **EP 2 817 136 B1**
(45) Veröffentlichungstag und Bekanntmachung des Hinweises auf die Patenterteilung: **30.11.2016**
(21) Anmeldenummer: 13701750.5
(22) Anmeldetag: 22.01.2013
(51) Int. Cl.: B29C 45/44, B29C 33/00

(54) **VERFAHREN ZUM HERSTELLEN EINES KUNSTSTOFFGEHÄUSES**
METHOD FOR PRODUCING A PLASTIC HOUSING
PROCÉDÉ POUR PRODUIRE UN CARTER EN PLASTIQUE

(30) Priorität: 23.02.2012 DE 102012202755
(43) Veröffentlichungstag der Anmeldung: 31.12.2014
(73) Patentinhaber: Robert Bosch GmbH, 70442 Stuttgart (DE)
(72) Erfinder: GEISE, Stephan, 59602 Ruethen (DE)
(86) Internationale Anmeldenummer: PCT/EP2013/051105
(87) Internationale Veröffentlichungsnummer: WO 2013/124102

(56) Entgegenhaltungen:
- EP-A2- 1 033 221
- DE-C1- 3 937 474
- DE-U1- 9 218 270
- GB-A- 1 174 886
- JP-A- H05 200 758
- JP-A- H08 155 588
- JP-U- S48 100 863
- JP-U- S53 137 171
- US-A1- 2005 055 818

## Beschreibung

### Stand der Technik

Die Erfindung betrifft ein Verfahren zum Herstellen eines Kunststoffgehäuses, insbesondere eines Pumpengehäuses nach der Gattung des Patentanspruchs 1. Ferner geht die Erfindung aus von einem Spritzgießwerkzeug zur Durchführung des Verfahrens nach der Gattung des Patentanspruchs 6.

Bei derartigen Kunststoffgehäusen, bei denen es sich beispielsweise um Pumpengehäuse handeln kann, sind üblicherweise im Gehäuseinnern Funktionsdurchgänge vorgesehen, die rechtwinklig oder schräg zueinander verlaufend angeordnet sind und zur Aufnahme von Bauelementen aus Kunststoff oder Metall dienen. Im Falle von Kunststoffpumpengehäusen sind in solchen Funktionsdurchgängen als Bauelemente aufeinander laufende Wellen geführt, die in bestimmungsgemäßem Betrieb der fertig montierten Pumpe aktiv die Pumpfunktion ausführen. Typischerweise werden derartige Kunststoffgehäuse im Spritzgießverfahren hergestellt.

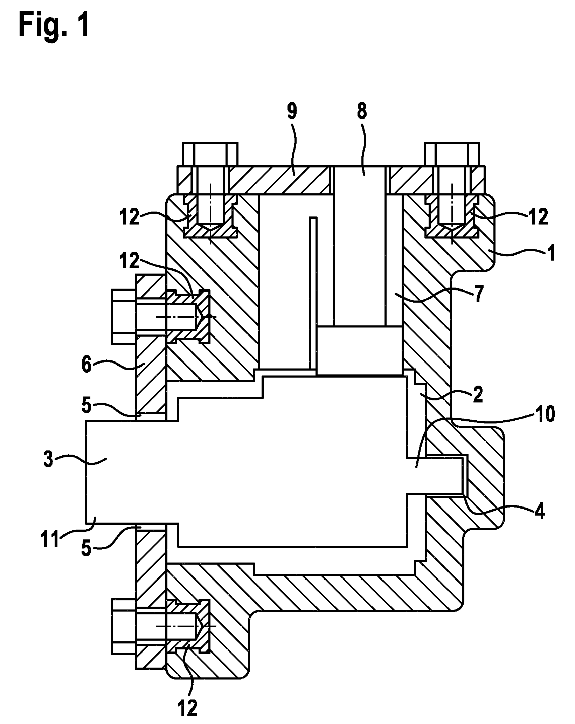

In Fig. 1 ist zur Veranschaulichung ein Querschnitt durch ein nach einem herkömmlichen Spritzgießverfahren aus Kunststoff gefertigtes typisches Pumpengehäuse 1 dargestellt, in dem eine erste Kammer 2 ausgebildet ist, die zur Aufnahme einer Pumpenwelle 3 dient, deren hinteres Wellenachsenende 10 in einer Aufnahmebohrung 4 gelagert ist und deren gegenüberliegendes Vorderende 11 durch eine Öffnung 5 hindurchragt, die in einer das Gehäuse 1 stirnseitig abschließenden Vorderplatte 6 vorgesehen ist. Quer zur ersten Kammer 2 verlaufend ist eine zweite Kammer 7 zur Aufnahme eines Pumpenzylinders 8 ausgebildet, welche sich zwischen der ersten Kammer 2 und einer das Gehäuse 1 oberseitig abschließenden Abdeckplatte 9 erstreckt und somit als ein rechtwinklig zur ersten Kammer 2 verlaufender Funktionsdurchgang 7 dient, in welchem der orthogonal zur Längsachse der Pumpenwelle 3 arbeitende Pumpenzylinder 8 aufgenommen ist. Gehäuseseitig vorgesehene Schraubeinfassungen 12 dienen zur Befestigung der Vorderplatte 6 und der oberen Abdeckplatte 9 am Gehäuse 1.

Um bei der Herstellung eines derartigen Gehäuses 1 einen Hohlraum zur Aufnahme der Pumpenwelle 8 auszubilden, wird ein geeigneter Formkern in das zur Herstellung des Kunststoff-gehäuses vorgesehene Spritzgießwerkzeug eingebracht und am Ende des Herstellungsprozesses der dazu korrespondierende Bereich entformt. Zu diesem Bereich rechtwinklig oder schräg verlaufende Funktionsdurchgänge bzw. Hohlräume werden während der Fertigung ausgebildet, indem jeweils genau aufeinander abgestimmte Schieber vorgesehen werden, welche dazu dienen, die entsprechenden, auch als Hinterschnitte bezeichneten, Bereiche zu entformen, welche nicht in normaler Entformungsrichtung entformbar sind. Nachteilig bei diesem herkömmlichen Herstellungsverfahren ist jedoch, dass an den tuschierten Schieberflächen durch die während des Herstellungsprozesses als flüssige Formmasse eingeleitete Kunststoffschmelze aufgrund der zugesetzten und abrasiv wirkenden Verstärkungsstoffe ein Abrieb bzw. Verschleiß entsteht, der nicht nur zu einer Schieberabnutzung mit einer daraus resultierenden Erhöhung der Wartungsintervalle infolge deren Nachbearbeitung, sondern auch zu einer Gratbildung in den entsprechenden Übergangsbereichen zwischen jeweils unmittelbar benachbarten Gehäusehohlräumen des durch diesen Herstellungsprozess erzeugten Gehäuses führt, so dass in der Regel ein zusätzlicher Prozessschritt zur Gratabtrennung erforderlich ist, der mit einem kostensteigernden Zeitaufwand verbunden ist.

Aus der JP H05-200758 A ist ein Verfahren zur Ausformung eines Hohlkörpers bekannt. Dabei wird beispielhaft ein Luftansaugrohr eines Fahrzeugs mit Hilfe von Metallkernen geformt. Die Metallkörper sind durch Öffnungen des Hohlkörpers geführt und greifen ineinander im mittleren Teil einer Durchgangsbohrung. Eine Kernform und eine ein Hohlelement bildende Form werden um die Kernmetalle angeordnet. Eine Kavität wird in die Kernform eingebracht. Ein wasserlösliches Harz wird eingespritzt um einen Kern zu formen. Die Kernform wird geöffnet und die das Hohlelement bildende Form wird geklemmt um einen Spritzguss durchzuführen. Anschließend werden die Metallkerne herausgezogen und das wasserlösliche Harz wird durch die Durchgangsbohrung entfernt.

### Vorteile der Erfindung

Im Gegensatz zum herkömmlichen Herstellungsverfahren, bei dem in der Regel Schieber zum Ausbilden von Hohlräumen bzw. Funktionsdurchgängen, die an die Hauptkammer schräg oder rechtwinklig verlaufend angrenzen, direkt auf den Formkern aufgesetzt werden und daraus nach anschließenden Prozessschritten des Einspritzens der Kunststoffschmelze, des Aushärtens und Entformens eine Gratbildung in den entsprechenden Übergangsbereichen des so gefertigten Gehäuses resultiert, die einen zusätzlichen Prozessschritt zum Entgraten erforderlich macht, hat das erfindungsgemäße Verfahren zum Herstellen eines Kunststoffgehäuses mit den Merkmalen des Patentanspruchs 1 den Vorteil, dass der jeweilige Schieber eines zur Hauptkammer angrenzenden Hohlraums bzw. Funktionsdurchgangs lediglich indirekt auf den Formkern für die Hauptkammer aufgesetzt wird, indem eine Abdichtvorrichtung bereitgestellt wird, die auf den Formkern derart aufgesetzt wird, dass sie mit ihrer Innenfläche diesen umschließt. In einem daran anschließenden Prozessschritt wird der für einen schräg oder rechtwinklig dazu verlaufenden Funktionsdurchgang vorgesehene Schieber auf der Abdichtvorrichtung abgestützt. Indem also erfindungsgemäß die Abdichtvorrichtung einerseits mit ihrer Innenfläche den Formkern umschließt und andererseits mit ihrer Außenfläche an der dem Formkern zugewandten Endfläche des Schiebers anliegt, erfolgt dadurch eine Abdichtung der entsprechenden Übergangsbereiche, wobei unter diesen Übergangsbereichen einerseits die in die Abdichtvorrichtung eingepresste Endfläche des Schiebers und andererseits der der Endfläche des Schiebers zugewandte Umfangsabschnitt des Formkerns zu verstehen ist. Aufgrund dieser Abdichtung wird vorteilhaft eine Gratbildung in diesen Übergangsbereichen praktisch vermieden, so dass in dem durch diesen Herstellungsprozess ausgebildeten Gehäuse die Übergangsbereiche zwischen der zentralen Gehäusekammer und einem darin ausmündenden Hinterschnitt bzw. Funktionsdurchgang gratarm ausgebildet werden. Dadurch kann beim erfindungsgemäßen Verfahren ein ansonsten erforderlicher zeitraubender und somit kostensteigernder Nachbearbeitungsprozessschnitt zur Gratentfernung entfallen.

Ein erfindungsgemäßes Spritzgießwerkzeug wird durch die Merkmale des Anspruchs 6 angegeben.

Weitere vorteilhafte Weiterbildungen und Ausgestaltungen der Erfindung ergeben sich durch die in den abhängigen Ansprüchen aufgeführten Maßnahmen. Indem die Abdichtvorrichtung als Abdichtring aus einem chemisch inerten Material mit geringer Adhäsion ausgebildet ist, geht ein derartiger Abdichtring praktisch keine Haftreaktion mit anderen Kunststoffen oder Gehäusematerialien ein, die bei dem Herstellungsverfahren zum Einsatz kommen. Dadurch ist erfindungsgemäß eine einfache und rasche Demontage und Entnahme des Abdichtrings aus dem zum Ende des Herstellungsverfahrens ausgebildeten Gehäuse nach dem Prozessschritt des Entformens möglich, so dass der Abdichtring nach einer vorbestimmten Abkühlzeitspanne in einem weiteren Spritzgießherstellungsprozeß wieder verwendbar ist. Gemäß einer bevorzugten Ausführungsform der Erfindung ist der Abdichtring zur einfachen Montage und Demontage mit einem Teilungsschlitz versehen. Eine an der Position des Teilungsschlitzes angeformte und zur Ringmitte hin ragende Nase, welche komplementär zu einer am Außenumfang des Formkerns vorgesehenen Nut ausgebildet ist, dient zum raschen und sicheren Fixieren des Abdichtrings an dem entsprechenden Formkern.

### Zeichnungen

Ausführungsformen der Erfindung sind in der nachfolgenden Beschreibung und in den beigefügten Zeichnungen näher erläutert. Letztere zeigen in stark schematisch gehaltenen Ansichten:
Fig. 1 eine Querschnittansicht eines nach einem herkömmlichen Verfahren aus Kunststoff hergestellten Pumpengehäuses mit einer ersten Kammer zur Aufnahme einer Pumpenwelle und einer zweiten Kammer zur Aufnahme eines Pumpzylinders, wobei die zweite Kammer einen orthogonal zur ersten Kammer verlaufenden Funktionsdurchgang bildet,

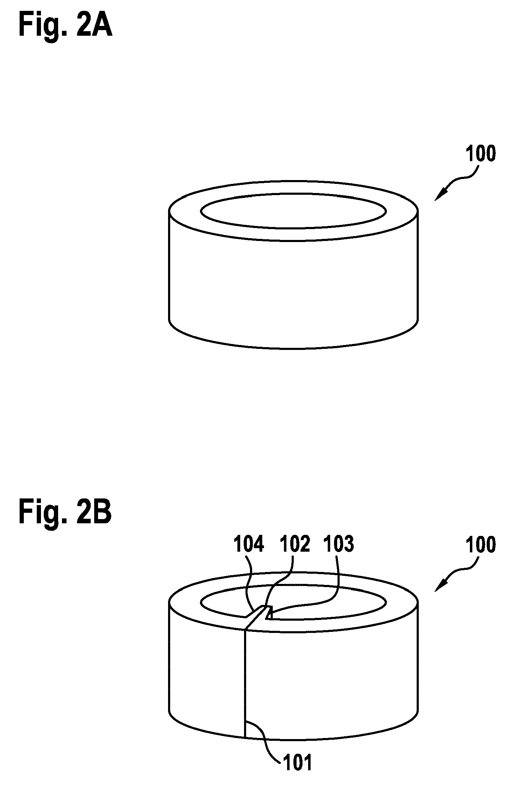

Fig. 2A eine Perspektivansicht eines Abdichtrings zur Durchführung des erfindungsgemäßen Verfahrens zum Herstellen des Pumpengehäuses gemäß einer ersten Ausführungsvariante,
Fig. 2B eine Perspektivansicht eines Abdichtrings zur Durchführung des erfindungsgemäßen Verfahrens zum Herstellen des Pumpengehäuses gemäß einer zweiten Ausführungsvariante, bei der der Abdichtring einen Teilungsschlitz und einen an der Position des Teilungsschlitzes nach innen ragenden keilförmigen Vorsprung zum Fixieren an einer Nut eines Formkerns aufweist,

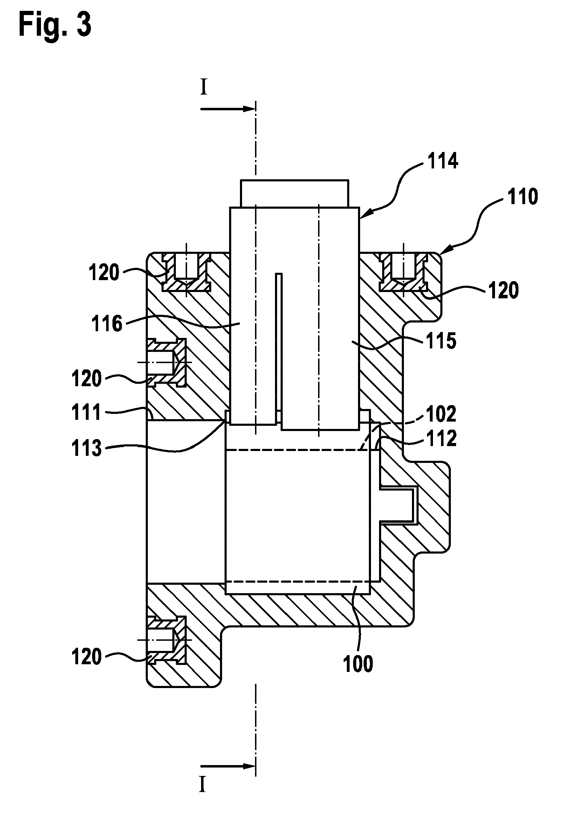

Fig. 3 eine Querschnittansicht eines erfindungsgemäßen Spritzgießwerkzeugs zum Ausbilden eines Pumpengehäuses während des erfindungsgemäßen Herstellungsverfahrens, wobei in dem Spritzgießwerkzeug ein Formkern mit an dessen Außenumfang aufgeschobenem und in der Nut des Formkerns mittels des keilförmigen Vorsprungs fixiertem Abdichtring und ein orthogonal zum Formkern verschiebbar angeordneter Schieber aufgenommen sind, und

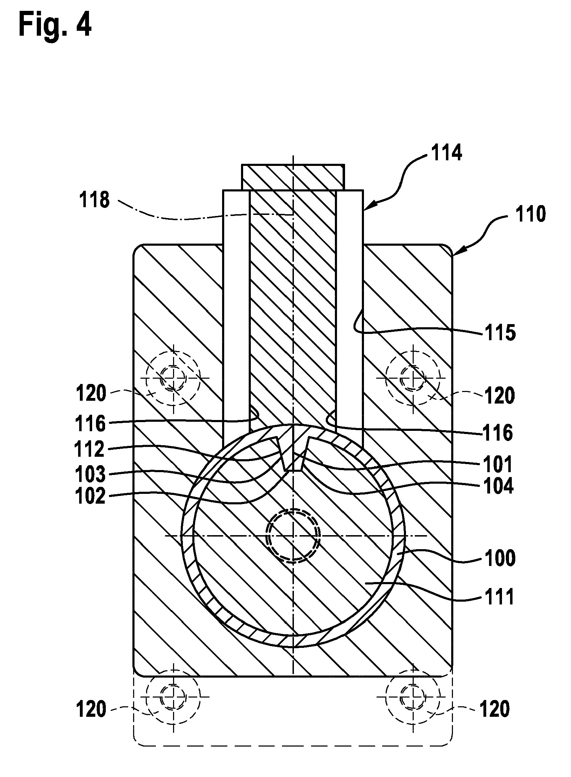

Fig. 4 eine Schnittansicht des Spritzgießwerkzeugs von Fig. 3 während des erfindungsgemäßen Herstellungsverfahrens entlang der Schnittlinie I-I in Fig. 3.

### Beschreibung der Ausführungsbeispiele

Fig. 2A zeigt eine zur Durchführung des erfindungsgemäßen Verfahrens zum Herstellen eines Kunststoff-Pumpengehäuses geeignet konzipierte Abdichtvorrichtung 100, welche als Abdichtring ausgebildet ist und gemäß einer ersten Ausführungsform eine geschlossene Form aufweist. Der Abdichtring 100 wird in einem ersten erfindungsgemäßen Verfahrensschritt aus einem spritzgießbarem Polymerisat, das bevorzugt aus Perfluoralkoxy-Copolymer (PFA) gebildet ist, in einem Spritzgießwerkzeug hergestellt. Nach einer alternativen Ausführungsvariante des erfindungsgemäßen Verfahrens wird der Abdichtring durch Extrusion aus einem elastischem Halbzeug hergestellt.

Fig. 2B zeigt eine zweite Ausführungsform der Abdichtvorrichtung 100 zur Durchführung des erfindungsgemäßen Verfahrens. Dabei weist die als Abdichtring 100 ausgebildete Abdichtvorrichtung einen radial verlaufenden Teilungsschlitz 101 auf, der den Abdichtring 100 in dessen Umfangsrichtung durchsetzt und sowohl ein einfaches Aufziehen des Abdichtrings auf einen Formkern als auch eine einfache Entnahme des Abdichtrings aus dem Gehäuse nach dem Entformungsprozessschritt erlaubt. Zusätzlich weist der Abdichtring zum Fixieren an dem Formkern eine in Richtung der Ringmitte ragende Nase 102 auf, die so an der Innenfläche des Abdichtrings 100 an der Position des Teilungsschlitzes 101 angeformt ist, dass der Teilungsschlitz 101 die Nase 102 symmetrisch in zwei Nasenhälften 103, 104 teilt, wobei sich die Nase 102 mit ihren beiden Nasenhälften 103, 104 zur Ringmitte hin im Querschnitt kontinuierlich keilförmig verjüngt. Die Größe des Abdichtrings 100 ist so bemessen, dass dessen Innendurchmesser an den Außendurchmesser des verwendeten Formkerns angepasst ist. Indem ferner die Form und die Größe der Nase 102 auf die Form und Größe einer an dem verwendeten Formkern angebrachten Nut abgestimmt sind, sind die Nase 102 des Abdichtrings 100 und die zugeordnete Nut an dem Formkern komplementär zueinander ausgebildet, so dass aufgrund dieser Zuordnung der Abdichtring 100 an dem verwendeten Formkern durch Formschluss sicher fixierbar ist.

Fig. 3 zeigt in einer stark schematisch gehaltenen Querschnittansicht eines erfindungsgemäßen Spritzgießwerkzeugs 110 zum Ausbilden eines Pumpengehäuses aus Kunststoff während des erfindungsgemäßen Herstellungsverfahrens. Innerhalb des Spritzgießwerkzeugs 110 ist ein Formkern 111 positioniert, der zum Ausbilden einer zentralen Gehäusekammer vorgesehen ist, welche zur Aufnahme einer Pumpenwelle dient. Auf den Außenumfang des Formkerns 111 ist der zuvor in einem gesonderten ersten erfindungsgemäßen Verfahrensschritt gemäß der in Fig. 2B veranschaulichten Ausführungsform ausgebildete erfindungsgemäße Abdichtring 100 aufgeschoben, wobei der Abdichtring 100 an einer Nut 112 im Außenumfang des Formkerns 111 mittels der an der Position des Schlitzes 101 angebrachten Nase 102, die sich zur Ringmitte hin keilförmig verjüngt und komplementär zur zugeordneten Nut 112 ausgebildet ist, fixiert wird. Zusätzlich wird der Abdichtring 100 an einem Absatz 113 abgestützt, welcher am Außenumfang des Formkerns 111 umlaufend ausgebildet ist. Dabei umschließt der Abdichtring 100 den Formkern und zwar zumindest in einem Umfangsbereich des Formkerns, welcher unmittelbar an den projektierten Funktionsdurchgang angrenzt, wo sich der durch die bestimmungsgemäße Endstellung bzw. Anschlagstellung des Schiebers 114 vordefinierte Hohlraum für den Funktionsdurchgang zum Formkern 111 hin öffnet. In einem daran anschließenden Verfahrensschritt wird das Spritzgießwerkzeug 110 geschlossen und orthogonal zum Formkern 111 ein Schieber 114 von der Oberseite des Spritzgießwerkzeugs 110 eingefahren. Der dem Formkern 111 zugewandte Bereich dieses Schiebers 114 ist gemäß dem in Fig. 3 dargestellten Ausführungsbeispiel bezüglich seiner Längserstreckung geteilt ausgebildet, wobei die aufgrund der Teilung ausgebildeten beiden parallel zueinander angeordneten Schieberteile 115, 116 zum Erzeugen von zwei unmittelbar zueinander benachbarten Hohlräume dienen. Der Schieber 114 fährt in vertikaler Richtung gegen den den Formkern 111 umschließenden Abdichtring 100, wobei das jeweilige dem Formkern 111 zugewandte Ende des Schieberteils 115, 116 am Abdichtring 100 konkav leicht eingedrückt wird. In dieser Schieberstellung, die seiner Anschlagstellung entspricht, werden die Übergangsflächen, d.h. Bereiche am Übergang zwischen der dem Formkern 111 zugewandten Endfläche des jeweiligen Schieberteils 115, 116 des Schiebers 114 und dem angrenzenden Umfangsoberflächenabschnitt des Formkerns 111, mittels des Abdichtrings 100 gegeneinander abgedichtet. Im nächsten Verfahrensschritt erfolgt durch einen - in der Figur nicht dargestellten - Anschnitt das Einspritzen des flüssigen Kunststoffs in das Spritzgießwerkzeug 110. Dabei werden der Formkern 111, der den Formkern 111 umschließende Abdichtring 100 und der in das Spritzgießwerkzeug 110 eingefahrene Teil des Schiebers 114 von der Kunststoffschmelze umflossen und die verbleibenden Hohlräume in dem Spritzgießwerkzeug 110 durch die Kunststoffschmelze ausgefüllt. Nach einer vorbestimmten Vernetzungszeit bzw. Abkühlzeit wird der Schieber 114 vertikal nach oben zurückgezogen und das Spritzgießwerkzeug 110 geöffnet. Im Anschluss daran erfolgt in einem weiteren Verfahrensschritt das Entformen des dabei ausgebildeten Gehäuses, wobei das Gehäuse zusammen mit dem Abdichtring 100 vom Formkern 111 entformt wird, indem zunächst das Gehäuse mit dem Abdichtring mittels eines Greifroboters in einer separaten Einrichtung abgelegt und danach der Abdichtring aus dem Gehäuse entnommen wird; nach einem darauf folgenden definiert durchgeführten Abkühlvorgang ist der Abdichtring nach einer vorbestimmten Zeitspanne für einen nächsten Spritzgießzyklus wieder verwendbar. Fig. 3 veranschaulicht mithin das erfindungsgemäße Verfahren in einem Prozessstadium, in welchem vor dem Prozessschritt des Einspritzens der flüssigen Kunststoffmasse und dem daran anschließenden Entformungsschritt in zuvor aufeinanderfolgenden Verfahrensschritten der Formkern 111 in das Spritzgießwerkzeug 110 eingesetzt wurde, worauf der Abdichtring 100 auf den Formkern 111 aufgeschoben wurde und der Schieber 114 in das Spritzgießwerkzeug 110 eingefahren wurde.

Fig. 4 zeigt das zum Ausbilden des Pumpengehäuses vorgesehene und bezüglich seiner vertikalen Mittelachse 118 symmetrisch ausgebildete Spritzgießwerkzeug 110 während des erfindungsgemäßen Herstellungsverfahrens in einer Schnittansicht entlang der Schnittlinie I-I von Fig. 3, wobei der Schieber 114 in seiner bestimmungsgemäßen Betriebsstellung in das Spritzgießwerkzeug 110 eingefahren ist. In diesem Verfahrensstadium ist der in dem Spritzgießwerkzeug 110 angeordnete Formkern 111 an seinem kreisförmigen Außenumfang von dem erfindungsgemäßen Abdichtring 100 gemäß der in Fig. 2B veranschaulichten Ausführungsform umschlossen. Dabei wurde in einem zuvor durchgeführten Verfahrensschritt der Abdichtring 100 zunächst in das Spritzgießwerkzeug 110 eingebracht, anschließend mittels des Teilungsschlitzes 101 aufgespreizt und im aufgespreizten Zustand auf den Formkern 111 so aufgeschoben, dass zumindest derjenige Umfangsoberflächenabschnitt des Formkerns 111, welcher an die Mündung des projektierten Funktionsdurchgangs unmittelbar angrenzt, vom umschließenden Abdichtringabschnitt abgedeckt wird. Anders ausgedrückt, dieser Umfangsoberflächenabschnitt des Formkerns 111 wird somit bei bestimmungsgemäß eingefahrener Endstellung des Schiebers 114 von dessen dem Formkern 111 zugewandter Endfläche abgedeckt, wobei die in Fig. 4 veranschaulichte Endstellung des Schiebers 114 Voraussetzung für die sich anschließenden Verfahrensschritte der Kunststoffeinspritzung, der Aushärtung und der Entformung ist. Mithin wird der Formkern 111 durch den Abdichtring 100 zumindest im Längsprojektionsbereich des orthogonal zur Längsachse des Formkerns 111 projektierten und verlaufenden Funktionsdurchgangs abgedichtet, worauf die Zentrierung und Fixierung des Abdichtrings 100 am Formkern mittels formschlüssigen Einhakens der keilförmig zum Ringzentrum ragenden und durch den Teilungsschlitz 101 zweigeteilt ausgebildeten Nase 102 in der zur Nase 102 komplementär am Formkern 111 ausgebildeten Nut 112 erfolgt. Der dann in seine Anschlagstellung eingefahrene Schieber 114 stützt sich mit seinem dem Formkern 111 zugewandten Ende, d.h. mit der jeweiligen Endfläche der beiden Schieberteile 115, 116, auf jenem Außenumfangsabschnitt des Abdichtrings 100 ab, der unmittelbar an den jeweiligen Funktionsdurchgang angrenzt. Wie Fig. 4 weiterhin veranschaulicht, ist der Abdichtring 100 derart dimensioniert, dass dessen Innenquerschnitt dem Außendurchmesser des Formkerns 111 entspricht und die Abmessungen und die Formgebung der keilförmig zur Ringmitte ragenden Nase 102 denen der in dem Außenumfang des Formkerns 111 eingelassenen Nut 112 entsprechen. Um eine optimale Dichtwirkung zu erzielen, beträgt die typische Ringstärke bzw. Ringdicke des Abdichtrings 100 vorzugsweise 2 - 3 mm.

In Fig. 3 und 4 sind in nicht weiter interessierender Weise Schraubeinfassungen 120 dargestellt, welche in dem Spritzgießwerkzeug 110 aufgenommen sind und nach erfolgtem Einspritzen und Erstarren der Kunststoffschmelze in dem dadurch ausgebildeten Gehäuse fest verankert sind. Diese Schraubeinfassungen dienen bei der Gehäuseendmontage zur Befestigung von Gehäuseabschlussplatten.

Bei Verwendung eines duroplastischen Kunststoffs zur Herstellung des Gehäuses wird das Spritzgießwerkzeug 110 auf ungefähr 160°C bis 190°C temperiert, so dass sich der im bevorzugten Ausführungsbeispiel aus Perfluoralkoxy-Copolymer (PFA) hergestellte Abdichtring 100 etwas ausdehnt und eine spezielle Elastizität erhält. Um eine höhere Führungsgenauigkeit des Schiebers 114 in dem Spritzgießwerkzeug zu erzielen, wird gemäß einer bevorzugten Ausführungsvariante des erfindungsgemäßen Verfahrens in den orthogonal zur zentralen Gehäusekammer verlaufenden Funktionsdurchgang eine - in Fig. 3 und 4 nicht dargestellte - Buchse eingesetzt, die aus Metall oder Kunststoff gefertigt sein kann und die vor dem Schließen des Spritzgießwerkzeugs 110 auf eines der Schieberteile 115, 116 des Schiebers 114 aufgesetzt wird. Der Schieber 114 wird dann mit der endseitig auf seinem Schieberteil 115 aufgesetzten Buchse gegen den Abdichtring 100 gefahren, wobei die Endfläche des Schieberteils zusammen mit der Buchse an dem Abdichtring 100 eingedrückt wird, und eine Anpassung der Endfläche des Schieberteils 115 und der Buchse an die Außenkontur des Formkerns 111 bzw. Abdichtrings 100 erfolgt.

Da der Abdichtrings 100 aus einem elastischen und chemisch inerten Material hergestellt ist, das im bevorzugten Ausführungsbeispiel ein Polymerisat aus Perfluoralkoxy-Copolymer ist, weist der Abdichtring aufgrund seiner materialspezifischen Eigenschaften den Vorteil einer äußerst geringen Adhäsion bzw. Haftfähigkeit auf, so dass der Abdichtring praktisch keine Haftreaktion mit anderen Kunststoffen, die bei dem Herstellungsverfahren zum Einsatz kommen, oder Gehäusematerialien zeigt. Dadurch ist erfindungsgemäß eine einfache und rasche Demontage und Entnahme des Abdichtrings aus dem zum Ende des Herstellungsverfahrens ausgebildeten Gehäuse nach dem Prozessschritt des Entformens möglich, so dass der Abdichtring nach einer vorbestimmten Abkühlzeitspanne in einem weiteren Spritzgießherstellungsprozeß wieder verwendbar ist.

Mit dem Einsatz des Abdichtrings 100 sind sich überschneidende Funktionsdurchgänge in Kunststoffgehäusen gratarm spritzgießbar. Dabei wird der zuvor in einem ersten erfindungsgemäßen Verfahrensschritt mittels eines weiteren - in den Figuren nicht dargestellten - Spritzgießwerkzeugs aus einem thermoplastischen Polymerisat wie Perfluoralkoxy-Copolymer spritzgegossene oder als Halbzeug extrudierte Abdichtring 100 auf den Formkern 111 in einem Spritzgießwerkzeug 110 aufgeschoben und fixiert; zur Abbildung eines dazu rechtwinklig oder schräg verlaufenden Funktionsdurchgangs wird in einem weiteren Verfahrensschritt ein orthogonal bzw. seitlich zum Formkern verschiebbar angeordneter Schieber 114 soweit in die Gießform bzw. in das Spritzgießwerkzeug entlang des geplanten bzw. projektierten Verlaufs des Funktionsdurchgangs eingefahren, bis die dem Formkern 111 zugewandte Endfläche des Schiebers 114 sich in den Außenumfang des Abdichtrings 100 einpreßt. Dadurch wirkt der Abdichtring als Dichtbrücke zwischen der Endfläche des Schiebers 114 auf der einen Seite und dem dazu angrenzenden Oberflächenabschnitt des Formkerns 111 auf der anderen Seite. Da der aus Perfluoralkoxy-Copolymer gebildete Abdichtring 100 elastisch ausgebildet ist, dient er insbesondere bei Verwendung von niedrigviskosen Kunststoffen als Dichtung und stützt den Schieber 114 auf dem Formkern 111 ab. Insbesondere bei der Verwendung von niedrigviskosem Duroplast-Material als Kunststoff-Formmasse bleibt der Abdichtring 100 auch bei relativ hohen Werkzeugtemperaturen formstabil und schützt die Übergangsbereiche zwischen Formkern 111 und Schieber 114, d.h. diejenigen Bereiche am Übergang zwischen der dem Formkern 111 zugewandten Endfläche des jeweiligen Schieberteils 115, 116 des Schiebers 114 und dem angrenzenden Oberflächenabschnitt des Formkerns 111, vor abrasiv auf die Schieberflächen des Schiebers 114 wirkenden Verstärkungsstoffen in der Kunststoffschmelze, wodurch eine normalerweise durch den Abrieb in diesen Übergangsbereichen einsetzende Gratbildung weitgehend verhindert wird und somit ein entsprechender Prozessschritt zur Gratbeseitigung entfallen kann.

## Patentansprüche

1. Verfahren zum Herstellen eines Kunststoffgehäuses, insbesondere eines Pumpengehäuses, welches durch Spritzgießen aus Kunststoff hergestellt wird, indem flüssiger Kunststoff in ein Spritzgießwerkzeug (110) mit wenigstens einem Formkern (111) und wenigstens einem Schieber (114) eingespritzt wird, **dadurch gekennzeichnet, dass** vor dem Einfahren des Schiebers (114) in das Spritzgießwerkzeug (110) und vor dem Einspritzverfahrensschritt am Außenumfang des Formkerns (111) eine Abdichtvorrichtung (100) angeordnet wird, die in eingefahrener Anschlagstellung des Schiebers (114) mit ihrer Außenfläche an der dem Formkern zugewandten Endfläche des Schiebers (114) anliegt, wodurch eine Abdichtung der entsprechenden Übergangsbereiche erfolgt, wobei unter diesen Übergangsbereichen einerseits die in die Abdichtvorrichtung (100) eingepresste Endfläche des Schiebers (114) und andererseits der der Endfläche des Schiebers (114) zugewandte Umfangsabschnitt des Formkerns (111) zu verstehen sind.

2. Verfahren nach Anspruch 1, **dadurch gekennzeichnet, dass** nach dem Einspritzen des flüssigen Kunststoffs mit anschließendem Abkühlen des eingespritzten Kunststoffs und nach dem Entfernen des Schiebers (114) aus dem Spritzgießwerkzeug (110) das Kunststoffgehäuse zusammen mit der Abdichtvorrichtung (100) entformt wird.

3. Verfahren nach Anspruch 1 oder 2, **dadurch gekennzeichnet, dass** die Abdichtvorrichtung (100) aus einem Polymerisat wie Perfluoralkoxy-Copolymer hergestellt wird.

4. Verfahren nach Anspruch 3, **dadurch gekennzeichnet, dass** die Abdichtvorrichtung (100) durch Spritzgießen hergestellt wird.

5. Verfahren nach Anspruch 3, **dadurch gekennzeichnet, dass** die Abdichtvorrichtung (100) durch Extrudieren zu einem elastischen Halbzeug hergestellt wird.

6. Spritzgießwerkzeug (110) zum Durchführen des Verfahrens nach einem der Ansprüche 1 bis 5, wobei das Kunststoffgehäuse durch Spritzgießen herstellbar ist, indem flüssiger Kunststoff in das Spritzgießwerkzeug (110) mit wenigstens einem Formkern (111) und wenigstens einem Schieber (114) einspritzbar ist, **dadurch gekennzeichnet, dass** eine Abdichtvorrichtung (100) derart an den Formkern (111) angepasst ist, dass die Abdichtvorrichtung (100) in am Formkern (111) montierten Zustand und in eingefahrener Anschlagstellung des Schiebers (114) mit ihrer Außenfläche an der dem Formkern zugewandten Endfläche des Schiebers (114) anliegt, wodurch eine Abdichtung der entsprechenden Übergangsbereiche erfolgt, wobei unter diesen Übergangsbereichen einerseits die in die Abdichtvorrichtung (100) eingepresste Endfläche des Schiebers (114) und andererseits der der Endfläche des Schiebers (114) zugewandte Umfangsabschnitt des Formkerns (111) zu verstehen sind.

7. Spritzgießwerkzeug nach Anspruch 6, **dadurch gekennzeichnet, dass** die Abdichtvorrichtung (100) aus einem Polymerisat gebildet ist.

8. Spritzgießwerkzeug nach Anspruch 7, **dadurch gekennzeichnet, dass** die Abdichtvorrichtung (100) aus Perfluoralkoxy-Copolymer gebildet ist.

9. Spritzgießwerkzeug nach Anspruch 6 bis 8, **dadurch gekennzeichnet, dass** die Abdicht-vorrichtung (100) als Abdichtring ausgebildet ist.

10. Spritzgießwerkzeug nach Anspruch 9, **dadurch gekennzeichnet, dass** der Abdichtring (100) einen Teilungsschlitz (101) aufweist, der den Abdichtring (100) in dessen Umfangsrichtung radial teilt.

11. Spritzgießwerkzeug nach Anspruch 9 oder 10, **dadurch gekennzeichnet, dass** der Abdichtring (100) eine nach innen zum Ringzentrum ragende Nase (102) aufweist, die sich bezüglich ihres Querschnitts zum Ringzentrum hin keilförmig verjüngt und komplementär zur einer am Außenumfang des Formkerns (111) angeordneten Nut (112) ausgebildet ist.

12. Spritzgießwerkzeug nach Anspruch 11, **dadurch gekennzeichnet, dass** die Nase (102) des Abdichtrings (100) derart an dessen Innenseite an der Position des Teilungsschlitzes (101) angeformt ist, dass der Teilungsschlitz (101) die Nase (102) in zwei symmetrische Nasenhälften (103, 104) teilt.

## Claims

1. Method for producing a plastic housing, in particular a pump housing, which is produced from plastic by means of injection moulding by liquid plastic being injected into an injection mould (110) having at least one mould core (111) and at least one slide (114), **characterized in that**, before the insertion of the slide (114) into the injection mould (110) and before the injection method step, a sealing device (100) is arranged on the outer circumference of the mould core (111) and, when the slide (114) is in the fully inserted position, the said sealing device lies with its outer surface against the end face of the slide (114) that is facing the mould core, whereby a sealing of the corresponding transitional regions takes place, these transitional regions being understood as meaning on the one hand the end face of the slide (114) that is pressed into the sealing device (100) and on the other hand the circumferential portion of the mould core (111) that is facing the end face of the slide (114).

2. Method according to Claim 1, **characterized in that**, after the injection of the liquid plastic with subsequent cooling down of the injected plastic and after the removal of the slide (114) from the injection mould (110), the plastic housing is demoulded together with the sealing device (100).

3. Method according to Claim 1 or 2, **characterized in that** the sealing device (100) is produced from a polymer such as perfluoroalkoxy copolymer.

4. Method according to Claim 3, **characterized in that** the sealing device (100) is produced by injection moulding.

5. Method according to Claim 3, **characterized in that** the sealing device (100) is produced by being extruded into an elastic semifinished product.

6. Injection mould (110) for carrying out the method according to one of Claims 1 to 5, it being possible for the plastic housing to be produced by means of injection moulding by it being possible for liquid plastic to be injected into the injection mould (110) having at least one mould core (111) and at least one slide (114), **characterized in that** a sealing device (100) is adapted to the mould core (111) in such a way that, in the state in which it is mounted on the mould core (111) and in the fully inserted position of the slide (114), the sealing device (100) lies with its outer surface against the end face of the slide (114) that is facing the mould core, whereby a sealing of the corresponding transitional regions takes place, these transitional regions being understood as meaning on the one hand the end face of the slide (114) that is pressed into the sealing device (100) and on the other hand the circumferential portion of the mould core (111) that is facing the end face of the slide (114).

7. Injection mould according to Claim 6, **characterized in that** the sealing device (100) is formed from a polymer.

8. Injection mould according to Claim 7, **characterized in that** the sealing device (100) is formed from perfluoroalkoxy copolymer.

9. Injection mould according to Claims 6 to 8, **characterized in that** the sealing device (100) is formed as a sealing ring.

10. Injection mould according to Claim 9, **characterized in that** the sealing ring (100) has a dividing slit (101), which radially divides the sealing ring (100) in its circumferential direction.

11. Injection mould according to Claim 9 or 10, **characterized in that** the sealing ring (100) has a projection (102), which protrudes inwardly towards the centre of the ring, with respect to its cross section is tapered in a wedge-shaped manner towards the centre of the ring and is formed in a way complementary to a groove (112) arranged on the outer circumference of the mould core (111).

12. Injection mould according to Claim 11, **characterized in that** the projection (102) of the sealing ring (100) is integrally formed on the inner side of the latter at the position of the dividing slit (101) in such a way that the dividing slit (101) divides the projection (102) into two symmetrical projection halves (103, 104).

## Revendications

1. Procédé de fabrication d'un carter en plastique, en particulier d'un carter de pompe, qui est fabriqué par moulage par injection de plastique, du plastique à l'état liquide étant injecté dans un outil de moulage par injection (110) avec au moins un noyau de moule (111) et au moins un coulisseau (114), **caractérisé en ce qu'**avant l'introduction du coulisseau (114) dans l'outil de moulage par injection (110) et avant l'étape de procédé d'injection, un dispositif d'étanchéité (100) est disposé au niveau de la périphérie extérieure du noyau de moule (111), lequel s'applique, dans la position de butée rentrée du coulisseau (114), avec sa surface extérieure contre la surface d'extrémité du coulisseau (114) tournée vers le noyau de moule, de sorte qu'une étanchéité des régions de transition correspondantes se produise, la surface d'extrémité du coulisseau (114) enfoncée dans le dispositif d'étanchéité (100) d'une part et la portion périphérique du noyau de moule (111) tournée vers la surface d'extrémité du coulisseau (114) d'autre part devant être prévues sous ces régions de transition.

2. Procédé selon la revendication 1, **caractérisé en ce qu'**après l'injection du plastique à l'état liquide, avec refroidissement subséquent du plastique injecté et après l'enlèvement du coulisseau (114) de l'outil de moulage par injection (110), le carter en plastique est démoulé conjointement avec le dispositif d'étanchéité (100).

3. Procédé selon la revendication 1 ou 2, **caractérisé en ce que** le dispositif d'étanchéité (100) est fabriqué à partir d'un polymérisat tel qu'un copolymère de perfluoroalkoxy.

4. Procédé selon la revendication 3, **caractérisé en ce que** le dispositif d'étanchéité (100) est fabriqué par moulage par injection.

5. Procédé selon la revendication 3, **caractérisé en ce que** le dispositif d'étanchéité (100) est fabriqué par extrusion pour former un produit semi-fini élastique.

6. Outil de moulage par injection (110) pour mettre en oeuvre le procédé selon l'une quelconque des revendications 1 à 5, dans lequel le carter en plastique peut être fabriqué par moulage par injection, du plastique à l'état liquide pouvant être injecté dans l'outil de moulage par injection (110) avec au moins un noyau de moule (111) et au moins un coulisseau (114), **caractérisé en ce qu'**un dispositif d'étanchéité (100) est adapté au noyau de moule (111) de telle sorte que le dispositif d'étanchéité (100), dans l'état monté sur le noyau de moule (111) et dans la position de butée rentrée du coulisseau (114), s'applique avec sa surface extérieure contre la surface d'extrémité du coulisseau (114) tournée vers le noyau de moule, de sorte qu'une étanchéité des régions de transition correspondantes se produise, la surface d'extrémité du coulisseau (114) enfoncée dans le dispositif d'étanchéité (100) d'une part et la portion périphérique du noyau de moule (111) tournée vers la surface d'extrémité du coulisseau (114) d'autre part devant être prévues sous ces régions de transition.

7. Outil de moulage par injection selon la revendication 6, **caractérisé en ce que** le dispositif d'étanchéité (100) est formé d'un polymérisat.

8. Outil de moulage par injection selon la revendication 7, **caractérisé en ce que** le dispositif d'étanchéité (100) est formé d'un copolymère de perfluoroalkoxy.

9. Outil de moulage par injection selon les revendications 6 à 8, **caractérisé en ce que** le dispositif d'étanchéité (100) est réalisé sous forme de bague d'étanchéité.

10. Outil de moulage par injection selon la revendication 9, **caractérisé en ce que** la bague d'étanchéité (100) présente une fente de séparation (101) qui divise radialement la bague d'étanchéité (100) dans sa direction périphérique.

11. Outil de moulage par injection selon la revendication 9 ou 10, **caractérisé en ce que** la bague d'étanchéité (100) présente un ergot (102) faisant saillie vers l'intérieur vers le centre de la bague, qui se rétrécit en sa section transversale vers le centre de la bague en forme de coin et qui est réalisé de manière complémentaire à une rainure (112) disposée au niveau de la périphérie extérieure du noyau de moule (111).

12. Outil de moulage par injection selon la revendication 11, **caractérisé en ce que** l'ergot (102) de la bague d'étanchéité (100) est façonné au niveau de son côté intérieur au niveau de la position de la fente de séparation (101) de telle sorte que la fente de séparation (101) divise l'ergot (102) en deux moitiés d'ergot symétriques (103, 104).
